# FASCICULE DE BREVET EUROPEEN

(11) **EP 1 551 191 B1**
(45) Date de publication et mention de la délivrance du brevet: **30.08.2006**
(21) Numéro de dépôt: 04300901.8
(22) Date de dépôt: 15.12.2004
(51) Int. Cl.: H04Q 7/22

(54) **Procédé de diffusion de messages multimédia à une flotte hétérogène de terminaux**
Verfahren zum Übertragung von Multimedianachrichten zu einer heterogenen Endgerätgruppe
Method for broadcasting multimedia messages to an heterogeneous terminal group.

(30) Priorité: 31.12.2003 FR 0351237
(43) Date de publication de la demande: 06.07.2005
(73) Titulaire: Societé Française du Radiotéléphone, 92915 Paris la Défense Cedex (FR)
(72) Inventeur: Caloud, Philippe, 38 330, SAINT-ISMIER (FR); Marsot, Rodolphe, 38000, GRENOBLE (FR); San Severino, Jean-Charles, 38330, MONTBONNOT SAINT MARTIN (FR)
(74) Mandataire: Schmit, Christian Norbert Marie

(56) Documents cités:
- WO-A-03/063525
- FR-A- 2 816 143
- US-A1- 2003 172 173

## Description

L'invention a pour objet un procédé de diffusion de messages multimédia à une flotte de terminaux.

Le domaine de l'invention est donc celui de la diffusion massive de messages dits MMS (Multimedia Message Service, pour service de message multimédia), que l'on appelle aussi messages multimédia. Un message multimédia est un message comportant plusieurs types de média parmi lesquels ont peut citer le texte, les images fixes ou animées, le son, la liste n'est pas exhaustive. Ces différents médias sont assemblés en un seul message et synchronisés en utilisant un langage de présentation de type SMIL (Synchronized Multimedia Integration Language, pour langage d'intégration et de synchronisation multimédia). De tels langages sont aussi par exemple WML (Wireless Markup Language), ou HTML (Hyper Text Markup Language, pour langage de balisage hypetexte). Un message multimédia est donc un fichier comportant une séquence d'instructions correspondant à un de ces langages, par exemple, de type HTML.

Plus particulièrement le domaine de l'invention est celui de la diffusion massive de messages MMS à des terminaux mobiles connectés à un réseau de télécommunications d'un opérateur de téléphonie mobile.

Un but de l'invention est de faciliter la diffusion massive de message MMS.

Un autre but de l'invention est de limiter les ressources systèmes requises pour la diffusion massive de messages MMS.

Un autre but de l'invention est de mieux garantir l'adéquation entre un contenu multimédia et le terminal sur lequel il est restitué.

Dans l'état de la technique l'envoi de messages MMS se fait via un service de communication interpersonnel, offrant un mécanisme interne de stockage et de renvoi de messages multimédias. Ces messages sont envoyés directement au terminal mobile, ayant des capacités MMS, dès que celui ci est visible et disponible dans le réseau de l'opérateur.

De manière générale, on rencontre principalement une distribution de trafic un vers un (un terminal vers un autre terminal), aussi connu sous le nom de trafic point à point, sans contrainte forte concernant le délai de réception des messages MMS.

Dans l'état de technique, les messages MMS sont aussi utilisés comme support à des services de diffusion de contenu vers des utilisateurs: ce sont des services de distribution massive comme par exemple des services d'information régulière (sport, météo, ...) ou événementielles (un but pendant un match de foot, le lancement d'un produit, ... ). Ces messages contiennent bien entendu également des sons, des images et des vidéos. Ils sont envoyés à plusieurs milliers, voire millions, d'abonnés simultanément et pratiquement en temps réel. C'est donc alors une distribution de trafic un vers N (une information vers N terminaux) avec une contrainte forte sur le délai de réception des messages MMS.

Dans l'état de la technique, les plates-formes génériques MMS-C sont proposées par les fournisseurs d'équipement aux opérateurs de téléphonie et ce quels que soient les modèles de trafic, interpersonnel ou distribution massive de contenu. Néanmoins, et ce dès le niveau des comités de standardisation, les spécificités du modèle de diffusion de contenu par MMS ont été prises en compte, notamment au niveau de l'interface entre la plate-forme MMS-C de l'opérateur de téléphonie et un serveur d'un fournisseur de contenu. Il s'agit de l'interface MM7 définit par le 3GPP et l'OMA (Open Mobile Alliance, pour Alliance ouverte pour le mobile).

Dans l'état de la technique, eu égard à ces spécifications MM7, un service de diffusion de contenu par messages MMS consiste en une application développée par un fournisseur de service, ou fournisseur de contenu, connecté à la plate-forme MMS-C d'un opérateur de téléphonie. Il s'agit fondamentalement d'un service de diffusion où la même information véhiculée par le même message MMS, est envoyée à l'ensemble des abonnés au service.

Pour envoyer un message MMS à la plate-forme MMS-C en utilisant l'interface MM7, le fournisseur de contenu génère une requête contenant, entre autres, le message MMS à envoyer et deux adresses: l'adresse du message MMS, et l'adresse du destinataire, c'est-à-dire l'adresse du terminal du destinataire en fait. L'adresse du destinataire est habituellement un numéro de téléphone, mais il est également possible d'utiliser une adresse IP ou une adresse de courrier électronique.

Il est possible d'adresser plusieurs destinataires / terminaux simultanément dans une même requête et pour un même MMS. En pratique cependant, cela reste limité à quelques centaines d'adresses simultanément dans une même requête.

Le fonctionnement d'un MMS-C standard est présenté plus en détail dans les spécifications de l'OMA et du 3GPP, notamment dans le document OMA-MMS-ENC-V1_2-20030915-C.doc.

Cette architecture standard présente cependant un certain nombre d'inconvénients pour les services de diffusion. En particulier, l'utilisation de la même architecture et des mêmes mécanismes internes que pour un service MMS interpersonnel présente les inconvénients suivants dans le cas d'exploitation des services de diffusion de messages MMS.

Ainsi, le fournisseur de contenu est obligé d'envoyer plusieurs fois un même message MMS en changeant à chaque envoi la liste des destinataires. Par exemple, pour envoyer un même contenu à un million d'utilisateurs, si la plate-forme MMS-C accepte au maximum 100 destinataires simultanément, le fournisseur de contenu est obligé d'envoyer 10000 fois le même contenu à la plate-forme MMS-C. Sur les plates-formes actuelles, il est même recommandé par les vendeurs d'envoyer un message à un seul destinataire. Il y a donc un coût de traitement pour le fournisseur de services qui est obligé de gérer un mécanisme complexe de flux de messages / destinataires avec la plate-forme MMS-C.

Sur une plate-forme MMS-C actuelle, un message MMS est traité, dupliqué, et stocké autant de fois qu'il y a de destinataires. Actuellement, pour un service de diffusion d'une seule et même information à un million d'abonnés, cette information est stockée un million de fois dans la plate-forme MMS-C. Il y a donc un surcoût important en termes de logiciel, matériel, et de licences, notamment de base de données.

Actuellement, une plate-forme MMS-C crée autant de notifications différentes, envoyées par SMS (Short Message Service, pour service de message court), qu'il y a de destinataires.

Le document WO 03/063525 décrit un système qui n'a pas ce défaut

Actuellement également, la diffusion massive de message MMS nécessite la mise en place d'une adaptation de contenu en fonction du type du terminal du destinataire. Si cette adaptation est faite par le fournisseur de contenu cela requiert que ce fournisseur de contenu maintienne en plus une base de données permettant d'associer un destinataire à un type de terminal. Si cette adaptation est faite par la plate-forme MMS-C cela crée une charge en terme de traitement avec en plus le risque que cette adaptation automatique modifie l'apparence du contenu, ce qui est préjudiciable au fournisseur de contenu.

De même actuellement, lorsque le fournisseur de contenu désire recevoir une confirmation de la bonne délivrance des messages par l'opérateur, il reçoit une confirmation pour chaque MMS émis, soit dans l'exemple, un millions de confirmations si tous les messages ont été bien délivrés.

Dans l'invention on résout ces problèmes en définissant un nouveau système d'adressage des messages MMS envoyés par un fournisseur de contenu. Ainsi à la place de l'adresse destinataire, un message de configuration d'une diffusion de contenu via un message MMS comporte au moins un identifiant de service, et autant de message MMS que de type de terminal auquel la diffusion s'adresse, chaque message MMS étant associé à un type de terminal.

Un message de notification, comportant au moins l'identifiant de service est alors envoyé à tous les terminaux de types cités dans le message de configuration connu par l'opérateur de téléphonie ayant reçu le message de configuration.

Un message de récupération, ou de transfert, d'un message MMS comportera alors un identifiant de service et un identifiant de type de terminal permettant à l'opérateur d'émettre en réponse au message de récupération, le bon message MMS.

L'invention permet donc de n'envoyer qu'un seul message de configuration pour tous les destinataires, de ne créer qu'un seul message de notification et de ne stocker qu'une fois par type de terminal le message MMS à diffuser.

L'invention a donc pour objet un procédé de diffusion de message multimédia à une flotte hétérogène de terminaux caractérisé en ce que :
- un serveur d'un opérateur de téléphonie reçoit un message de configuration de diffusion d'un contenu multimédia, le message de configuration comportant au moins un champ identifiant de service, un champ identifiant d'un type de terminal et pour chaque type de terminal identifié par le message de configuration, un message multimédia associé, un message multimédia étant compatible avec le type de terminal auquel il est associé,
- le serveur de l'opérateur enregistre le message de configuration dans une mémoire de stockage, le message de configuration étant alors identifié dans la mémoire de stockage par l'identifiant de service, chaque message multimédia du message de configuration étant associé à cet identifiant de service,
- le serveur de l'opérateur émet, au moins un message de notification de réception d'un message multimédia à au moins un terminal mobile d'un abonné à l'opérateur de téléphonie, le message de notification comportant un champ identifiant de message multimédia comportant lui-même au moins un champ identifiant de service dont le contenu est celui du champ identifiant de service du message de configuration, l'abonné étant référencé dans une base de données abonnés.

Avantageusement l'invention est aussi caractérisée en ce que :
- le serveur de l'opérateur reçoit un message de récupération d'un message multimédia, le message de récupération comportant un champ type de terminal, et, dans un champ identifiant de message multimédia, un champ identifiant de service, et,
- le serveur de l'opérateur parcourt la mémoire de stockage pour trouver un message de configuration identifié par le contenu du champ identifiant de service,
- le serveur de l'opérateur parcourt le message de configuration trouvé pour trouver un message multimédia identifié par contenu du champ type de terminal,
- le serveur de l'opérateur émet le message multimédia trouvé en réponse au message de récupération.

Avantageusement l'invention est aussi caractérisée en ce que le champ identifiant de message multimédia du message de notification comporte aussi un champ type de terminal, le contenu de ce champ type de terminal étant extrait de la base de données abonnés.

Avantageusement l'invention est aussi caractérisée en ce que :
- le serveur de l'opérateur reçoit un message de récupération d'un message multimédia, le champ identifiant de message multimédia du message de récupération comportant un champ identifiant de message multimédia et un champ type de terminal,
- s'il n'y a pas identité entre le champ type de terminal du message de récupération, et le champ type de terminal du champ identifiant de message multimédia, alors le serveur de l'opérateur met à jour la base de données abonnés pour prendre en compte le changement de terminal de l'abonné,
- le serveur de l'opérateur parcourt la mémoire de stockage pour trouver un message de configuration identifié par le contenu du champ identifiant de service,
- le serveur de l'opérateur parcourt le message de configuration trouvé pour trouver un message multimédia identifié par contenu du champ type de terminal du message de récupération,
- le serveur de l'opérateur émet le message multimédia trouvé en réponse au message de récupération.

Avantageusement l'invention est aussi caractérisée en ce que, s'il n'existe pas dans le message de configuration trouvé de message multimédia correspondant au contenu du champ type de terminal du message de récupération, le serveur émet un message multimédia par défaut.

Avantageusement l'invention est aussi caractérisée en ce que :
- le serveur de l'opérateur reçoit un message de transfert comportant un champ identifiant de destinataire, et un champ identifiant de message multimédia comportant un champ identifiant de service,
- le serveur émet vers le terminal identifié par le champ identifiant de destinataire un message de notification comportant, dans un champ identifiant de message multimédia, le contenu du champ identifiant de service du message de transfert.

Avantageusement l'invention est aussi caractérisée en ce que :
- le serveur de l'opérateur calcule, pour chaque message multimédia du message de configuration, un résumé numérique du message, ce résumé étant enregistré dans un champ résumé numérique associé au message multimédia dans la mémoire de stockage.

Avantageusement l'invention est aussi caractérisée en ce que :
- le serveur de l'opérateur reçoit un message de transfert, le message de transfert comportant un champ identifiant de destinataire, et un message multimédia,
- le serveur de l'opérateur calcule un résumé numérique du message multimédia du message de transfert,
- le serveur de l'opérateur recherche dans la mémoire de stockage le message multimédia dont le contenu du champ résumé numérique correspond au résumé numérique calculé pour le message multimédia du message de transfert,
- le serveur de l'opérateur émet vers le terminal identifié par le contenu du champ destinataire du message de transfert un message de notification comportant dans un champ identifiant de message multimédia un champ identifiant de service dont le contenu est le contenu du champ identifiant de service associé au message multimédia trouvé dans la mémoire de stockage.

Avantageusement l'invention est aussi caractérisée en ce que le serveur de l'opérateur associe à chaque identifiant de service au moins un compteur d'accès.

Avantageusement l'invention est aussi caractérisée en ce que le message de configuration comporte une adresse d'envoi de statistiques d'accès.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1: une illustration de moyens mettant en oeuvre le procédé selon l'invention.
Figure 2: une illustration d'étapes du procédé selon l'invention.

Dans la description lorsque l'on prête une action à un appareil, cette action est en fait effectuée par un microprocesseur de l'appareil commandé par des codes instructions enregistrés dans une mémoire de programme de l'appareil.

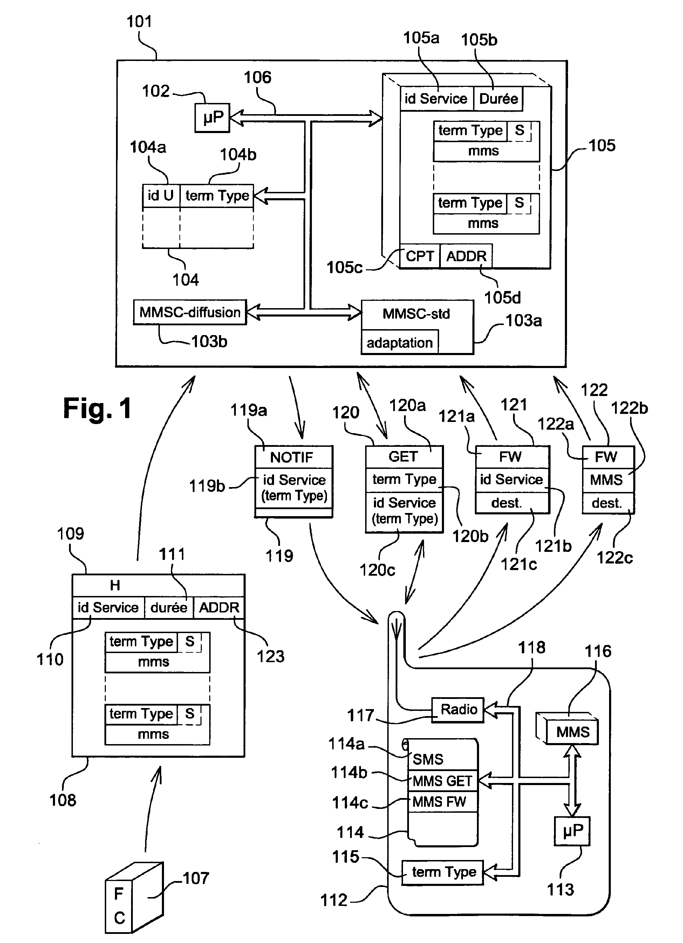

La figure 1 montre un serveur 101 d'un opérateur de téléphonie mobile, le serveur 101 étant une plate-forme MMS-C. Le serveur 101 comporte un microprocesseur 102, une mémoire 103a de programme MMS-C standard, une mémoire 103b de programme MMS-C de diffusion, une mémoire 104 pour l'association d'identifiant utilisateur et de type de terminal, et une mémoire 105 de stockage de messages de configuration de diffusion. Les éléments 102 à 105 sont connectés via un bus 106. Dans la pratique les mémoires 104 et 105 peuvent être réparties sur d'autres serveurs de l'opérateur de téléphonie mobile sous forme de bases de données auxquelles le serveur 101 a alors accès.

La mémoire 103a comporte des codes instructions pour la mise en oeuvre des services MMS-C interpersonnel, y compris 'adaptation des messages. La mémoire 103b comporte des codes instruction pour la mise en oeuvre des services MMS-C de diffusion selon l'invention.

La mémoire 104 comporte au moins deux colonnes, une colonne 104a pour enregistrer un identifiant utilisateur, et une colonne 104b pour enregistrer un type de terminal. Un identifiant utilisateur est un numéro de téléphone (MSISDN), une adresse IP version 4 ou 6, .... Un type de terminal est une valeur alphanumérique définie par le constructeur du terminal, ou convenue entre l'opérateur de téléphonie mobile et les fournisseurs de contenus ayant recours aux prestations de l'opérateur.

La mémoire 105 comporte autant d'enregistrements que de messages de configuration de diffusion reçus par le serveur 101. Un enregistrement comporte un champ 105a identifiant de service, dans une variante un enregistrement comporte aussi un champ 105b de durée de validité de l'enregistrement. Un enregistrement comporte aussi un ou plusieurs messages multimédia, chacun de ces messages multimédia étant référencé par un champ type de terminal. Dans une variante un message multimédia est aussi associé à un champ résumé numérique.

La figure 1 montre aussi un serveur 107 d'un fournisseur de contenu apte à émettre un message 108 de configuration de diffusion selon l'invention. Un tel message 108 comporte un en-tête 109 permettant la reconnaissance du message 108 comme étant un message de configuration d'une diffusion multimédia, et permettant aussi l'acheminement du message 108 entre le serveur 107 et le serveur 101.

Le message 108 comporte aussi un champ 110 identifiant de service, et dans une variante un champ 111 de durée de validité. Le message 108 comporte aussi un ou plusieurs messages multimédia chacun de ces messages multimédia étant associé à un type de terminal.

La figure 1 montre aussi un terminal 112 doté de capacités MMS. Un tel terminal est, dans une mise en oeuvre préférée un téléphone mobile. Cependant le terme terminal peut être interprété au sens large pour la mise en oeuvre de l'invention. Tout appareil doté de capacités MMS peut en effet tenir le rôle du terminal pour la mise en oeuvre du procédé selon l'invention.

Le terminal 112 comporte un microprocesseur 113, une mémoire 114 de programme, une mémoire 115 de type de terminal, une mémoire 116 de stockage des messages MMS et des circuits 117 d'interface radio avec le réseau de l'opérateur de téléphonie gérant le serveur 101. Les éléments 113 à 117 sont connectés par un bus 118.

La mémoire 114 comporte au moins une zone 114a comportant des codes instructions pour la gestion des messages SMS, une zone 114b comportant des codes instructions pour la récupération de messages MMS, et une zone 114c comportant des codes instructions pour le transfert de messages MMS.

Le terminal 112 est ainsi capable de recevoir au moins un message 119 SMS de notification de réception d'un message MMS. Le terminal 112 est aussi capable d'émettre au moins un message de récupération d'un message MMS. Le terminal 112 est en outre capable d'émettre au moins un message 121-122 de transfert d'un message MMS.

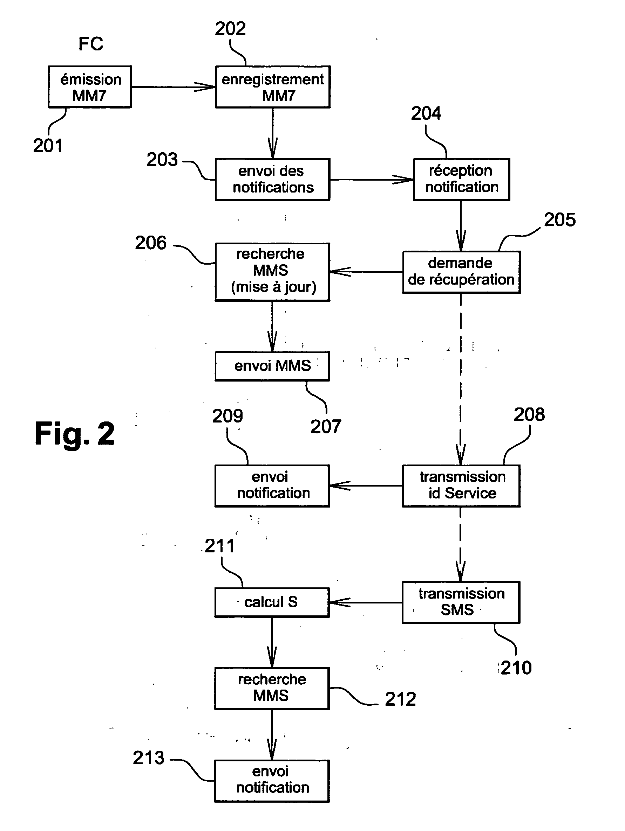

La figure 2 montre une étape 201 préliminaire au cours de laquelle le serveur 107 d'un fournisseur de contenu produit et émet le message 108 de configuration d'une diffusion de contenu par messages MMS. Dans cette étape le fournisseur de contenu a produit autant de messages MMS que de types de terminaux sur lesquels le fournisseur de contenu souhaite diffuser le contenu multimédia. Un terminal d'un type donné est en effet doté de certaines capacités de restitution multimédia qui varient d'un type de terminal à un autre. Ces capacités sont, pour les plus évidentes, la taille de son écran, le nombre de couleurs d'affichage, sa capacité à afficher des images animées ou non, ses capacités sonores etc. Un même contenu multimédia doit donc être formaté de façon différente selon le type de terminal sur lequel il va être restitué. Par exemple dans le cas d'un match de foot, le score peut être transmis avec une image fixe, ou avec une séquence animée d'un ralenti de l'action ayant conduit à la modification du score. Par exemple encore dans le cas du lancement d'un produit, le message publicitaire peut contenir seulement une image ou une séquence animé plus ou moins longue et plus ou moins colorée. Par exemple aussi dans le cas d'une annonce météo, cette annonce peut contenir ou ne pas contenir une séquence animée d'une prise de vue par satellite. On voit bien qu'une même information / contenu, peut être illustrée différemment selon les capacités de restitution du terminal recevant cette information.

Un message de configuration d'une diffusion d'un contenu via des messages MMS comporte donc, dans l'invention, autant de messages MMS que de types de terminal destinataire du contenu. On note que pour un type de terminal donné, un message de configuration ne comporte qu'un et un seul message MMS.

De l'étape 201 on passe à une étape 202 de réception et d'enregistrement du message 108 par le serveur 101. Dans cette étape le serveur 101 met à jour la mémoire 105 en fonction du contenu du message 108. Le serveur 101 identifie le message 108 comme étant un message de mise à jour d'une diffusion de contenu selon l'invention grâce au contenu de l'en-tête 109. Cette mise à jour se fait en créant un nouvel enregistrement dans la mémoire 105, et en transférant le contenu du message 108 dans ce nouvel enregistrement.

Dans une variante de l'invention, pour chaque message MMS du message 108, le serveur 101 calcule un résumé numérique qu'il associe au message MMS correspondant via un champ résumé numérique. Un tel résumé numérique est, par exemple, une somme de contrôle, le résultat de l'application de l'algorithme MD5 ou SHA-1 sur le message MMS.

De l'étape 202 on passe à une étape 203 d'envoi de notifications de réception d'un message MMS. Dans cette étape le serveur 101 produit et émet des messages SMS tels que le message 119. Le message 119 comporte au moins un champ 119a code instruction dont le contenu indique qu'il s'agit d'un message de notification de réception d'un message MMS et un champ 119b identifiant de message MMS. Le champ identifiant de message MMS comporte au moins un champ identifiant de service dont le contenu est celui du champ identifiant de service de l'enregistrement nouvellement créé à l'étape 202. Dans une variante le champ identifiant de message MMS du message 119 comporte aussi un champ type de terminal dont le contenu est le type de terminal que l'opérateur a associé au destinataire du message 119. Le champ identifiant de message MMS du message de notification selon l'invention correspond au champ URL (Universal Resource Locator, pour adresse universelle de ressource) des messages de notification de réception d'un message MMS de l'état de la technique.

Ce message ainsi créé est envoyé à tous les terminaux que le serveur 101 est capable d'associer aux contenus des champs types de terminaux de l'enregistrement nouvellement créé à l'étape 202. Cette association se fait en utilisant la mémoire 104. Pour chaque champ type de terminal de l'enregistrement nouvellement créé à l'étape 202, le serveur parcourt la mémoire 104 et plus particulièrement la colonne 104b, pour trouver les lignes de la mémoire 104 dont le contenu du champ de la colonne 104b correspond au contenu du champ type de terminal de l'enregistrement nouvellement créé à l'étape 202. Pour chacune des lignes trouvées, il peut y en avoir aucune, le serveur produit et émet un message 119 dont le destinataire est identifié par le contenu du champ de la colonne 104a de la ligne trouvée.

Dans une variante, la mémoire 104 comporte une colonne supplémentaire permettant d'associer un identifiant d'utilisateur à une liste d'identifiants de services, cette liste pouvant être vide. Dans cette variante la liste d'identifiants de services correspond à une liste de services souscrits par l'utilisateur. Dans cette variante, pour l'étape 203, on considère qu'une ligne est trouvée si la liste d'identifiants de services de cette ligne comporte l'identifiant de service de l'enregistrement nouvellement créé à l'étape 202.

Dans l'invention, le serveur 101 crée au maximum N messages de notification différents, où N est le nombre de message MMS contenus dans l'enregistrement nouvellement créé à l'étape 202. Dans l'invention, l'adresse du message MMS à récupérer est en effet remplacée par un identifiant de service, qui est le même pour tous les destinataires. Dans une variante cet identifiant de service est associé à un type de terminal. Dans l'invention, l'espace mémoire requis pour effectuer une diffusion massive de message multimédia est donc limitée à l'enregistrement du seul message de configuration de diffusion.

De l'étape 203 on passe à une étape 204 dans laquelle le terminal 112 reçoit le message 119 de notification.

Dans l'étape 204, le terminal 112, doté de capacités MMS, reçoit le message 119 de notification de réception d'un message MMS. Le terminal 112 traite ce message comme n'importe quel message de notification de réception d'un message MMS. La mise en place ne requiert en effet aucune modification des terminaux destinataires des messages MMS.

De l'étape 204 on passe à une étape 205 de production et d'émission par le terminal 112 d'un message de récupération d'un message 120 de récupération d'un message multimédia. Le message 120 est produit à partir du contenu du message 119, encore une fois d'une manière connue. Le terminal 112 place dans le champ 120c URL du message de récupération le contenu de ce qu'il croit être le champ URL du message 119, c'est-à-dire le champ 119b. Dans la pratique ce contenu est en fait le contenu du champ identifiant de message MMS, c'est-à-dire, un identifiant de service et, dans une variante, un type de terminal.

Le message 120 comporte aussi, en plus du champ 120b identifiant de message MMS, un champ type de terminal dont le contenu est identique au contenu de la mémoire 115. Le message 120 comporte aussi un champ 120a identifiant le message 102 comme étant un message de récupération de message MMS.

De l'étape 205, on passe à une étape 206 de réception et traitement du message 120 par le serveur 101.

Dans la variante ou le champ 120c du message 102 comporte un champ type de terminal, le serveur 101 compare le contenu de ce champ au contenu du champ 120b du message 120. S'il n'y a pas identité, le serveur 101 effectue une mise à jour de la mémoire 104. Cette mise à jour consiste à changer le type de terminal associé, dans la mémoire 104, à l'émetteur du message 120 en fonction du contenu du champ 120b du message 120.

Dans l'étape 206, le serveur 101 parcourt la mémoire 105 pour trouver l'enregistrement dont le contenu du champ 105a identifiant de service correspond au contenu du champ identifiant de service du champ 120c identifiant de message MMS du message 120. Une fois cet enregistrement trouvé, le serveur 101 parcourt cet enregistrement pour trouver le message MMS dont le type de terminal associé correspond au contenu du champ 120b type de terminal du message 120.

Dans une étape 207 suivante, le message MMS ainsi trouvé est alors envoyé en réponse au message 120 de récupération.

A l'étape 206, si le serveur 101 ne trouve pas de message MMS correspondant aux critères de recherche, alors il utilise un message MMS par défaut dans l'enregistrement trouvé. Ce message par défaut est fourni par le fournisseur de contenu dans le message 108 de configuration. A ce message par défaut il peut alors faire subir une adaptation automatique du message au type de terminal de l'utilisateur et il envoie ce message adapté en réponse au message 120.

Si la mémoire 105 ne contient pas d'enregistrement correspondant au contenu du champ identifiant de service du champ 120c, alors le serveur 101 répond au message 120 par un message d'erreur.

Dans l'invention on n'a bien besoin de ne sauvegarder que N messages, où N correspond à un nombre de types de terminaux, pour assurer le diffusion d'un contenu à un très grand nombre, de l'ordre de 10000 fois N, de destinataires.

Dans l'invention toujours, les cas où l'on a recours à l'adaptation automatique de contenu sont limités aux cas où un destinataire a changé de type de terminal, sans avertir son opérateur de téléphonie et sans que ce type de terminal ait été pris en compte lors de la configuration de la diffusion.

La figure 2 montre aussi une étape 208 dans laquelle le terminal 112 produit et émet vers le serveur 101 un message 121 de transfert d'un message MMS. Cette étape fait suite à la réception par le terminal 112 du message 119.

Le message 121 comporte un champ 121a dont le contenu est un code instruction identifiant le message 121 comme un message de transfert. Le message 121 comporte aussi un champ 121 b dont le contenu identifie un message MMS à transférer. Le message 121 comporte aussi un champ 121c identifiant un destinataire.

Le contenu du champ 121 b correspond au contenu du champ 119b. Le contenu du champ 121 c est tout ce qui permet d'identifier un terminal auquel on peut envoyer un message MMS. Le contenu du champ 121c peut donc être un numéro de téléphone, une adresse Internet, une adresse de courrier électronique ....

De l'étape 208 on passe à une étape 209 de réception et de traitement par le serveur 101 du message 121. Dans l'étape 209, le serveur 101 utilise le contenu du champ 121 b pour trouver un enregistrement dans la mémoire 105. Si un enregistrement est trouvé, alors le serveur 101 utilise le contenu du champ 121 c pour déterminer le type de terminal destinataire.

S'il s'agit d'un numéro de téléphone, alors le serveur sait que le destinataire du transfert est un terminal mobile, et le serveur 101 produit et émet un message du type du message 119 vers ce téléphone mobile. Dans ce cas on passe de l'étape 209 à l'étape 204.

S'il s'agit d'une adresse de courrier électronique, alors le serveur 101 parcourt l'enregistrement trouvé pour trouver le message MMS correspondant au type courrier électronique et utilise le message MMS ainsi trouvé pour composer un courrier électronique qui est alors envoyé à l'adresse contenue dans le champ 121c. Il est ainsi possible au détenteur d'un téléphone bas de gamme de se transférer sur une adresse de courrier électronique un message multimédia dans une version ayant un rendu meilleur que le rendu qui lui est accessible sur son téléphone mobile. Un courrier électronique est en effet consulté sur un ordinateur personnel qui n'est soumis à aucune restriction en terme de restitution de contenu multimédia.

La figure 2 montre aussi une étape 208 dans laquelle le terminal 112 produit et émet vers le serveur 101 un message 122 de transfert d'un message MMS.

Le message 122 comporte un champ 122a dont le contenu est un code instruction identifiant le message 122 comme un message de transfert. Le message 122 comporte aussi un champ 122b dont le contenu est un message MMS à transférer. Le message 122 comporte aussi un champ 122c identifiant un destinataire.

Le contenu du champ 122c est tout ce qui permet d'identifier un terminal auquel on peut envoyer un message MMS. Le contenu du champ 122c peut donc être un numéro de téléphone, une adresse Internet, une adresse de courrier électronique ....

De l'étape 210 on passe à une étape 211 de réception et de traitement du message 122 par le serveur 101.

Dans l'étape 211, le serveur 101 calcule un résumé numérique du contenu du champ 122b. L'algorithme utilisé pour calculer ce résumé est le même que celui utilisé à l'étape 202.

De l'étape 211 on passe à une étape 212 de recherche dans la mémoire 105 d'un message MMS. Dans l'étape 212 le serveur 101 parcourt l'ensemble des messages MMS de la mémoire 105 jusqu'à ce qu'il trouve celui dont le résumé numérique précalculé à l'étape 202 correspond au résumé numérique calculé à l'étape 211.

Si le serveur 101 ne trouve pas un tel message MMS, alors le message 122 de transfert est traité comme un message interpersonnel standard.

Si le serveur 101 trouve un tel message MMS, alors on passe à une étape 213 d'envoi d'un message 119 de notification. Ayant trouvé un message MMS, le serveur 101 est en connaissance d'un identifiant d'enregistrement contenant ce message MMS. Le serveur 119 est donc en mesure de produire un message de notification 119. Ce message est envoyé au destinataire identifié par le contenu du champ 122c. Une fois un identifiant de service trouvé, le message 122 est traité comme le message 121.

Dans une variante de l'invention le message de configuration comporte aussi le champ 111 de durée de validité. Ce champ est de préférence une date de fin de validité du message de configuration. Dans cette variante, le serveur 101 enregistre le contenu du champ 111 dans le champ 105b. A intervalle régulier, le serveur 101 compare le contenu des champs 105b à la date courante. Les enregistrements dont le contenu du champ 105b est inférieur à la date courante sont alors effacés. Tous les messages reçus par le serveur 101 portant sur ces enregistrement seront alors soit ignorés, soit provoqueront l'émission d'un message d'erreur en réponse.

Dans une autre variante de l'invention, chaque enregistrement de la mémoire 105 comporte un champ 105c compteur. Ce champ permet d'enregistrer une valeur numérique. A la création de l'enregistrement, à l'étape 202, le contenu du champ 105c est initialisé à la valeur 0. Dans cette variante, dans l'étape 206, le contenu du champ 105c compteur de l'enregistrement trouvé est augmenté d'une unité. Le champ 105c sert de compteur d'accès au contenu numérique identifié par l'identifiant de service contenu dans le champ 105a. Il est ainsi possible de savoir combien de fois un contenu numérique donné a été accédé. Cette information intéresse principalement le fournisseur de contenu qui peut ainsi se faire une idée de l'intérêt porté à son contenu. Dans cette variante, le serveur 101 met en oeuvre un protocole de communication de type HTTPS (Hyper Text Transfer Protocol Securised, pour protocole de transmission hypertexte sécurisé) ce qui permet aux fournisseurs de contenus, après identification, d'accéder aux statistiques d'accès aux contenus fournis et stockés dans la mémoire 105. Un fournisseur de contenu ne peut accéder qu'aux statistiques des contenus qu'il a fourni. Le serveur 101 comporte donc une table, non représentée, pour associer chaque identifiant de contenu à un identifiant de fournisseur de contenus.

Dans une amélioration de cette variante l'opérateur gère pour chaque enregistrement de la mémoire 105, et pour chaque type de terminal de l'enregistrement un compteur par jour. Cela permet au fournisseur de contenu se connectant au serveur 101 via le protocole HTTPS de pouvoir consulter des statistiques détaillées d'accès à ses contenus.

Dans une autre variante de l'invention, les statistiques d'accès sont envoyées, pour chaque enregistrement de la mémoire 105 pour lequel une adresse d'envoi de statistiques a été fournie, à intervalles réguliers. de configuration. Dans cette variante une adresse, par exemple de type adresse de courrier électronique, est fournie via un champ 123 du message 108 de configuration. Cette adresse est alors enregistrée dans un champ 105d de l'enregistrement de la mémoire 105 auquel cette adresse est associée.

Dans la présente description la configuration de la diffusion a été décrite comme se faisant via un seul message de configuration. Dans la pratique cette configuration peut être réalisée via plusieurs messages de configuration. Le champ 110 du message 108 de configuration permet en effet de déterminer quel enregistrement de la mémoire 105 doit être mis à jour en fonction du contenu du message 108. Il est ainsi possible d'ajouter un type de terminal, de changer une adresse d'envoi de statistique, une durée, etc.

## Revendications

1. Procédé de diffusion de message multimédia à une flotte hétérogène de terminaux **caractérisé en ce que** :
- un serveur d'un opérateur de téléphonie reçoit un message de configuration de diffusion d'un contenu multimédia, le message de configuration comportant au moins un champ identifiant de service, un champ identifiant d'un type de terminal et pour chaque type de terminal identifié par le message de configuration, un message multimédia associé, un message multimédia étant compatible avec le type de terminal auquel il est associé,
- le serveur de l'opérateur enregistre le message de configuration dans une mémoire de stockage, le message de configuration étant alors identifié dans la mémoire de stockage par l'identifiant de service, chaque message multimédia du message de configuration étant associé à cet identifiant de service,
- le serveur de l'opérateur émet, au moins un message de notification de réception d'un message multimédia à au moins un terminal mobile d'un abonné à l'opérateur de téléphonie, le message de notification comportant un champ identifiant de message multimédia comportant lui-même au moins un champ identifiant de service dont le contenu est celui du champ identifiant de service du message de configuration, l'abonné étant référencé dans une base de données abonnés.

2. Procédé selon la revendication 1, **caractérisé en ce que** :
- le serveur de l'opérateur reçoit un message de récupération d'un message multimédia, le message de récupération comportant un champ type de terminal et, dans un champ identifiant de message multimédia, un champ identifiant de service et,
- le serveur de l'opérateur parcourt la mémoire de stockage pour trouver un message de configuration identifié par le contenu du champ identifiant de service,
- le serveur de l'opérateur parcourt le message de configuration trouvé pour trouver un message multimédia identifié par contenu du champ type de terminal,
- le serveur de l'opérateur émet le message multimédia trouvé en réponse au message de récupération.

3. Procédé selon la revendication 1, **caractérisé en ce que** le champ identifiant de message multimédia du message de notification comporte aussi un champ type de terminal, le contenu de ce champ type de terminal étant extrait de la base de données abonnés.

4. Procédé selon la revendication 3, **caractérisé en ce que** :
- le serveur de l'opérateur reçoit un message de récupération d'un message multimédia, le champ identifiant de message multimédia du message de récupération comportant un champ identifiant de message multimédia et un champ type de terminal,
- s'il n'y a pas identité entre le champ type de terminal du message de récupération, et le champ type de terminal du champ identifiant de message multimédia, alors le serveur de l'opérateur met à jour la base de données abonnés pour prendre en compte le changement de terminal de l'abonné,
- le serveur de l'opérateur parcourt la mémoire de stockage pour trouver un message de configuration identifié par le contenu du champ identifiant de service,
- le serveur de l'opérateur parcourt le message de configuration trouvé pour trouver un message multimédia identifié par contenu du champ type de terminal du message de récupération,
- le serveur de l'opérateur émet le message multimédia trouvé en réponse au message de récupération.

5. Procédé selon l'une des revendications 2 ou 4, **caractérisé en ce que** s'il n'existe pas dans le message de configuration trouvé de message multimédia correspondant au contenu du champ type de terminal du message de récupération, le serveur émet un message multimédia par défaut.

6. Procédé selon la revendication 1, **caractérisé en ce que** :
- le serveur de l'opérateur reçoit un message de transfert comportant un champ identifiant de destinataire et un champ identifiant de message multimédia comportant un champ identifiant de service,
- le serveur émet vers le terminal identifié par le champ identifiant de destinataire un message de notification comportant, dans un champ identifiant de message multimédia, le contenu du champ identifiant de service du message de transfert.

7. Procédé selon la revendication 1, **caractérisé en ce que** :
- le serveur de l'opérateur calcule, pour chaque message multimédia du message de configuration, un résumé numérique du message, ce résumé étant enregistré dans un champ résumé numérique associé au message multimédia dans la mémoire de stockage.

8. Procédé selon la revendication 7, **caractérisé en ce que** :
- le serveur de l'opérateur reçoit un message de transfert, le message de transfert comportant un champ identifiant de destinataire, et un message multimédia,
- le serveur de l'opérateur calcule un résumé numérique du message multimédia du message de transfert,
- le serveur de l'opérateur recherche dans la mémoire de stockage le message multimédia dont le contenu du champ résumé numérique correspond au résumé numérique calculé pour le message multimédia du message de transfert,
- le serveur de l'opérateur émet vers le terminal identifié par le contenu du champ destinataire du message de transfert un message de notification comportant dans un champ identifiant de message multimédia un champ identifiant de service dont le contenu est le contenu du champ identifiant de service associé au message multimédia trouvé dans la mémoire de stockage.

9. Procédé selon l'une des revendications 1 à 8, **caractérisé en ce que** le serveur de l'opérateur associe à chaque identifiant de service au moins un compteur (105c) d'accès.

10. Procédé selon l'une des revendications 1 à 9, **caractérisé en ce que** le message de configuration comporte une adresse (123) d'envoi de statistiques d'accès.

## Claims

1. A method for broadcasting multimedia messages to a heterogeneous fleet of terminals **characterized in that**:
- a server of a telephony operator receives a configuration message of broadcasting a multimedia content, the configuration message comprising at least one field identifying the service, one field identifying a terminal type, and for each terminal type identified by the configuration message, an associated multimedia message, a multimedia message being compatible with the terminal type with which it is associated.
- the operator server records the configuration message in a storage memory, the configuration message then being identified in the storage memory by the service identifier, each multimedia message of the configuration message being associated with this service identifier,
- the operator server sends at least one notification message of the reception of a multimedia message to at least one mobile terminal of a subscriber to the telephony operator, the notification message comprising a field identifying the multimedia message, itself comprising at least one field identifying the service whose content is that of the field identifying the configuration message service, the subscriber being referenced in a subscriber database.

2. The method according to claim 1, **characterized in that**:
- the operator server receives a multimedia message retrieval message, the retrieval message comprising a terminal type field and, in a field identifying the multimedia message, a field identifying the service and,
- the operator server scans the storage memory to find a configuration message identified by the content of the field identifying the service,
- the operator server scans the configuration message found to find a multimedia message identified by the content of the terminal type field,
- the operator server sends the multimedia message found in response to the retrieval message.

3. The method according to claim 1, **characterized in that** the field identifying the multimedia message of the notification message also comprises a terminal type field, the content of this terminal type field being extracted from the subscriber database.

4. The method according to claim 3, **characterized in that**:
- the operator server receives a message for retrieval of a multimedia message, the field identifying the multimedia message of the retrieval message comprising a field identifying the multimedia message and a terminal type field,
- if there is no identity between the terminal type field of the retrieval message and the terminal type field of the field identifying the multimedia message, then the operator service updates the subscriber database to take account of the change in the subscriber terminal,
- the operator server scans the storage memory to find a configuration message identified by the content of the field identifying the service,
- the operator server scans the configuration message found to find a multimedia message identified by the content of the terminal type field of the retrieval message,
- the operator server sends the multimedia message found in response to the retrieval message.

5. The method according to one of claims 2 or 4, **characterized in that** if the multimedia message corresponding to the content of the terminal type field of the retrieval message does not exist in the configuration message found, the server sends a multimedia message by default.

6. The method according to claim 1, **characterized in that**:
- the operator server receives a transfer message comprising a field identifying the recipient and a field identifying the multimedia message comprising a field identifying the service,
- the server sends to the terminal identified by the recipient identifier field a notification message comprising, in a field identifying the multimedia message, the content of the field identifying the transfer message service.

7. The method according to claim 1, **characterized in that**:
- the operator server calculates a digital summary of the message for each multimedia message of the configuration message, this summary being recorded in a digital summary field associated with the multimedia message in the storage memory.

8. The method according to claim 7, **characterized in that**:
- the operator server receives a transfer message, the transfer message comprising a field identifying the recipient, and a multimedia message,
- the operator server calculates a digital summary of the multimedia message of the transfer message,
- the operator server searches in the storage memory for the multimedia message whose content of the digital summary field corresponds to the digital summary calculated for the multimedia message of the transfer message,
- the operator server sends to the terminal, identified by the content of the recipient field of the transfer message, a notification message comprising in a field identifying the multimedia message, a field identifying the service whose content is the content of the field identifying the service associated with the multimedia message found in the storage memory.

9. The method according to one of claims 1 to 8, **characterized in that** the operator server associates at least one access counter (105c) with each service identifier.

10. The method according to one of claims 1 to 9, **characterized in that** the configuration message comprises an address (123) for sending access statistics.

## Patentansprüche

1. Verfahren zum Multimediamitteilungsverteilen an eine heterogene Flotte von Terminals, **dadurch gekennzeichnet,**
- **dass** ein Server eines Telefoniebetreibers eine Verteilungskonfigurationsmitteilung eines Multimediainhalts erhält, wobei die Konfigurationsmitteilung mindestens ein Serviceidentifikatorfeld, ein Feld, das einen Terminaltyp identifiziert und für jeden von der Konfigurationsmitteilung identifizierten Terminaltyp eine dazu gehörende Multimediamitteilung aufweist, wobei eine Multimediamitteilung mit dem Terminaltyp, zu dem sie gehört, kompatibel ist,
- **dass** der Server des Betreibers die Konfigurationsmitteilung in einen Speicher speichert, wobei die Konfigurationsmitteilung daher in dem Speicher durch den Serviceidentifikator identifiziert wird, wobei jede Multimediamitteilung der Konfigurationsmitteilung mit diesem Serviceidentifikator verbunden ist,
- **dass** der Server des Betreibers mindestens eine Empfangsbekanntgabemitteilung einer Multimediamitteilung an mindestens ein mobiles Terminal eines Abonnenten des Telephoniebetreibers sendet, wobei die Bekanntgabemitteilung ein Multimediamitteilungsidentifikatorfeld enthält, das selbst mindestens ein Serviceidentifikatorfeld enthält, dessen Inhalt der des Serviceidentifikatorfelds der Konfigurationsmitteilung ist, wobei der Abonnent in einer Abonnentendatenbank referenziert ist.

2. Verfahren nach Anspruch 1, **dadurch gekennzeichnet:**
- **dass** der Server des Betreibers eine Rückgewinnungsmitteilung einer Multimediamitteilung empfängt, wobei die Rückgewinnungsmitteilung ein Terminaltypfeld enthält und in einem Multimediamitteilungsidentifikatorfeld ein Serviceidentifikatorfeld, und
- **dass** der Server des Betreibers den Speicher durchsucht, um eine Konfigurationsmitteilung zu finden, die von dem Inhalt des Serviceidentifikatorfelds identifiziert ist,
- **dass** der Server des Betreibers die Konfigurationsmitteilung durchsucht, die er gefunden hat, um eine Multimediamitteilung zu finden, die von dem Inhalt des Terminaltypfelds identifiziert ist,
- **dass** der Server des Betreibers die gefundene Multimediamitteilung als Antwort auf die Rückgewinnungsmitteilung sendet.

3. Verfahren nach Anspruch 1, **dadurch gekennzeichnet, dass** das Multimediamitteilungsidentifikatorfeld der Bekanntgabemitteilung auch ein Terminaltypfeld enthält, wobei der Inhalt dieses Terminaltypfelds aus der Abonnentendatenbank extrahiert wird.

4. Verfahren nach Anspruch 3, **dadurch gekennzeichnet:**
- **dass** der Server des Betreibers eine Rückgewinnungsmitteilung einer Multimediamitteilung empfängt, wobei das Multimediamitteilungsidentifikatorfeld der Rückgewinnungsmitteilung ein Multimediamitteilungsidentifikatorfeld und ein Terminaltypfeld enthält,
- **dass**, wenn keine Übereinstimmung zwischen dem Terminaltypfeld der Rückgewinnungsmitteilung und dem Terminaltypfeld des Multimediamitteilungsidentifikatorfelds besteht, der Server des Betreibers die Abonnentendatenbank aktualisiert, um die Änderung des Terminals des Abonnenten zu berücksichtigen,
- **dass** der Server des Betreibers den Speicher durchsucht, um eine Konfigurationsmitteilung zu finden, die durch den Inhalt des Serviceidentifikatorfelds identifiziert ist,
- **dass** der Server des Betreibers die gefundene Konfigurationsmitteilung durchsucht, um eine Multimediamitteilung zu finden, die durch den Inhalt des Terminaltypfelds der Rückgewinnungsmitteilung identifiziert ist,
- **dass** der Server des Betreibers die gefundene Multimediamitteilung als Antwort auf die Rückgewinnungsmitteilung sendet.

5. Verfahren nach einem der Ansprüche 2 oder 4, **dadurch gekennzeichnet, dass**, wenn in der gefundenen Konfigurationsmitteilung keine Multimediamitteilung, die dem Inhalt des Terminaltypfelds der Rückgewinnungsmitteilung entspricht, existiert, der Server eine Standardmultimediamitteilung sendet.

6. Verfahren nach Anspruch 1, **dadurch gekennzeichnet:**
- **dass** der Server des Betreibers eine Übertragungsmitteilung empfängt, die ein Empfängeridentifikatorfeld und ein Multimediamitteilungsidentifikatorfeld, das ein Serviceidentifikatorfeld enthält, aufweist,
- **dass** der Server zu dem von dem Empfängeridentifikatorfeld identifizierten Terminal eine Bekanntgabemitteilung sendet, die in einem Multimediamitteilungsidentifikatorfeld den Inhalt des Serviceidentifikatorfelds der Übertragungsmitteilung enthält.

7. Verfahren nach Anspruch 1, **dadurch gekennzeichnet:**
- **dass** der Server des Betreibers für jede Multimediamitteilung der Konfigurationsmitteilung eine digitale Zusammenfassung der Mitteilung berechnet, wobei diese Zusammenfassung in einem digitalen Zusammenfassungsfeld registriert wird, das mit der Multimediamitteilung in dem Speicher verbunden ist.

8. Verfahren nach Anspruch 7, **dadurch gekennzeichnet:**
- **dass** der Server des Betreibers eine Übertragungsmitteilung empfängt, wobei die Übertragungsmitteilung ein Empfängeridentifikatorfeld und eine Multimediamitteilung enthält,
- **dass** der Server des Betreibers eine digitale Zusammenfassung der Multimediamitteilung der Übertragungsmitteilung berechnet,
- **dass** der Server des Betreibers in dem Speicher die Multimediamitteilung sucht, deren Inhalt des digitalen Zusammenfassungsfelds der digitalen Zusammenfassung entspricht, die für die Multimediamitteilung der Übertragungsmitteilung berechnet wurde,
- **dass** der Server des Betreibers zu dem von dem Inhalt des Empfängerfelds der Übertragungsmitteilung identifizierten Terminal eine Bekanntgabemitteilung sendet, die in einem Multimediamitteilungsidentifikatorfeld ein Serviceidentifikatorfeld enthält, dessen Inhalt der Inhalt des Serviceidentifikatorfelds ist, das zu der Multimediamitteilung gehört, die in dem Speicher gefunden wurde.

9. Verfahren nach einem der Ansprüche 1 bis 8, **dadurch gekennzeichnet, dass** der Server des Betreibers mit jedem Serviceidentifikator mindestens einen Zugangszähler (105c) verbindet.

10. Verfahren nach einem der Ansprüche 1 bis 9, **dadurch gekennzeichnet, dass** die Konfigurationsmitteilung eine Sendeadresse (123) für Zugangsstatistiken enthält.
